# DEMANDE DE BREVET EUROPEEN

(11) **EP 0 732 303 A1**
(43) Date de publication de la demande: **18.09.1996**
(21) Numéro de dépôt: 96400464.2
(22) Date de dépôt: 05.03.1996
(51) Int. Cl.: C01B 21/04, C21D 1/76

(54) **Procédé et installation de génération d'azote pour traitement thermique**

(30) Priorité: 16.03.1995 FR 9503050
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Domergue, Didier, F-92220 Bagneux (FR); Rancon, Yannick, Hinsdale, Illinois 60521 (US)
(74) Mandataire: Vesin, Jacques

(57) **Abrégé**

L'invention concerne un procédé de génération d'un gaz à base d'azote selon lequel on élabore un gaz de réaction à base d'azote dans un réacteur catalytique de désoxygénation, par réaction entre un gaz primaire d'azote qui comprend une teneur résiduelle en oxygène et un gaz secondaire (4) comprenant au moins un des gaz réducteurs du groupe constitué par l'hydrogène et les hydrocarbures, le gaz de réaction obtenu en sortie de réacteur catalytique étant épuré de tout ou partie de sa vapeur d'eau par des étapes successives de refroidissement et d'extraction, ce procédé étant remarquable en ce que:
- la réaction ainsi que les étapes de refroidissement et d'extraction sont réalisées en pression;
- le point du conduit principal où s'effectue l'adjonction de gaz secondaire est alimenté en gaz primaire selon un mode tout ou rien non régulé.

## Description

La présente invention concerne le domaine des atmosphères utilisées dans les fours de traitement thermique.

Ces atmosphères contiennent le plus souvent une espèce majoritaire qui est généralement l'azote, complétée le cas échéant, selon le type de traitement thermique pratiqué et la nature du matériau traité, par des espèces additionnelles plus ou moins actives telles que H₂, CO, H₂O, CO₂ ou encore des hydrocarbures.

L'azote utilisé dans de telles atmosphères de traitement thermique est le plus couramment d'origine cryogénique. Sa pureté est alors excellente (un tel azote contient typiquement moins de 5 ppm d'oxygène résiduel et moins de 5 ppm de vapeur d'eau résiduelle correspondant à un point de rosée inférieur à -65°C), et convient en pratique pour quasiment tous les types de traitement thermique.

Ces dernières années, s'est développée de façon considérable la production d'azote par des moyens tels que membranes (on utilise aussi souvent l'expression "module membranaire") ou module d'adsorption préférentielle, dans les deux cas souvent appelés "moyens sur site" ou "on-site", en complément de la production traditionnelle par voie cryogénique, car ces moyens de production on-site présentent les avantages suivants :
- une excellente sécurité d'approvisionnement ;
- de faibles coûts de production ;
- la possibilité de fournir, à des coûts très attractifs, et selon les applications considérées, des azotes de pureté adaptée, qualifiés souvent "d'azotes impurs", dans la mesure où la concentration résiduelle en oxygène dans ces azotes peut varier de quelques milliers de ppm à quelques pourcents.

Néanmoins, si l'on considère l'exemple de l'azote produit par perméation, son moindre coût est lié à une pureté en oxygène et en vapeur d'eau sensiblement moins bonne que celle obtenue par voie cryogénique (typiquement 0,5 % à 5 % d'oxygène résiduel et moins de 10 ppm de vapeur d'eau), sachant que plus la quantité d'oxygène résiduel tolérée est élevée, et plus faible sera le coût, réciproquement plus la quantité d'oxygène résiduel tolérée est faible, plus important sera le coût d'un tel azote membranaire, le rapprochant ainsi des coûts atteints par voie cryogénique.

La présence d'oxygène résiduel dans ces azotes impurs rend délicate leur utilisation dans des atmosphères de traitement thermique.

On peut tenter dans un premier temps d'adapter la pureté de l'azote produit au cahier des charges de chaque site utilisateur : tel métal considéré peu oxydable étant moins sensible à la présence d'espèces oxydantes dans l'atmosphère, alors que tel autre métal traité sera plus sensible à une telle présence; ou encore, tel aspect de surface du métal recherché nécessitera une atmosphère à pouvoir oxydant plus faible que dans le cas d'un autre aspect de surface recherché. On pourrait alors distinguer les deux cas suivants :
- des cas où le cahier des charges du site utilisateur est compatible avec la présence d'oxygène (par exemple supérieur à 0,5 %) dans l'atmosphère de traitement. Mais il faut signaler qu'un tel cahier des charges se présente très rarement en pratique. On peut néanmoins citer dans cette catégorie le cas du recuit de fontes avec une certaine tolérance de décarburation jusqu'à environ 0,3 mm ;
- les cas où le cahier des charges du site utilisateur n'est pas compatible avec la présence d'oxygène libre dans l'atmosphère de traitement, ces cas représentant l'immense majorité des traitements thermiques pratiqués dans l'industrie, il est alors absolument nécessaire d'abaisser la teneur en oxygène résiduel dans l'atmosphère de traitement à moins de 20 ppm.

On en conclut donc que l'emploi d'azote impur (obtenu par voie non cryogénique) nécessite de façon impérative, et dans la quasi-totalité des cas pratiques industriels, une désoxygénation de cet azote impur, préalablement à tout contact de l'atmosphère avec les pièces à traiter.

Les méthodes envisagées dans la littérature pour trouver une solution à ce problème de désoxygénation de l'azote peuvent être rassemblées en deux catégories : une désoxygénation in situ, ou une désoxygénation ex situ.

Dans le premier cas, l'azote qui contient l'oxygène résiduel est injecté tel quel dans le four, conjointement avec une ou plusieurs autres espèces gazeuses qui vont agir comme piégeurs d'oxygène (on dit aussi le plus souvent "getter"), grâce à leurs propriétés réductrices.

Il s'agit par exemple de H₂, CO, SiH₄, les hydrocarbures CxHy, ou encore le méthanol CH₃OH (qui lui se décompose d'abord en CO et H₂).

Le "getter" va alors réagir à l'intérieur de l'enceinte thermique, en température, avec l'oxygène libre à éliminer, pour former selon les cas de la vapeur d'eau, du CO, de l'hydrogène, du CO₂, ou plusieurs de ces éléments.

Ces procédés de désoxygénation in situ sont connus et font l'objet d'une littérature abondante, ils présentent néanmoins les inconvénients suivants :
- une telle décomposition thermique in situ est largement fonction de la température de l'enceinte de traitement. En conséquence, si la température de traitement est trop basse ou encore si le mélange azote + oxygène + "getter" est injecté dans une partie trop froide de l'enceinte thermique, la réaction de désoxygénation sera incomplète, laissant de l'oxygène résiduel entrer en contact avec les pièces à traiter ;
- selon ces procédés, la quantité d'oxygène résiduel présent initialement dans l'azote non cryogénique à épurer est généralement et volontairement maintenue inférieure à 0,5 % ou encore 1 % volumique, ceci afin d'avoir la certitude qu'une désoxygénation quasi-complète (inférieure à 20 ppm O₂) se produira avant que l'atmosphère n'entre en contact avec les pièces métalliques à traiter. On favorisera donc ici des azotes impurs dont la concentration résiduelle d'oxygène est relativement faible, entraînant proportionnellement un coût d'élaboration élevé ;
- il faut encore noter qu'une telle réaction de désoxygénation conduit à la création d'espèces oxydantes telles que CO₂ et H₂O, certes moins oxydantes que l'oxygène, mais dont le caractère oxydant et décarburant peut être clairement incompatible avec le cahier des charges de nombreux traitements thermiques pratiqués.

On peut citer dans cette catégorie de traitements compatibles avec une désoxygénation in situ le cas classique des procédés de cémentation d'aciers au carbone utilisant des atmosphères azote/méthanol, où la création d'espèces oxydantes CO₂ et H₂O est largement compensée par la présence des espèces réductrices H₂ et CO, et par la présence éventuelle d'une régulation par ajouts d'hydrocarbure(s).

La seconde catégorie de méthodes, dites ex situ, met en oeuvre un pré-mélange de l'azote impur (qui peut ici aisément contenir plus de 0,5 % d'oxygène résiduel), avec le getter, le mélange réagissant dans un réacteur catalytique de désoxygénation placé à l'extérieur de l'enceinte de traitement thermique.

Le point-clef de ces méthodes est donc que la réaction de désoxygénation se produit avant l'introduction du mélange gazeux dans l'enceinte de traitement thermique, donc avant que l'atmosphère n'entre en contact avec les pièces métalliques à traiter.

La combinaison oxygène/getter n'est pas ici spontanée, elle est effectuée sur un catalyseur, typiquement palladium/alumine ou encore platine/alumine.

L'azote issu du réacteur de désoxygénation est alors substantiellement dépourvu d'oxygène résiduel (moins de 20 ppm volumique), et contient de même que précédemment, des espèces du type CO₂, H₂O, CO, H₂, CH₄ (selon le getter utilisé).

La Demanderesse avait proposé, dans le document EP-A-370.872, un procédé entrant dans cette catégorie, combinant de l'azote impur avec de l'hydrogène sur un catalyseur au palladium. Si un tel procédé est d'une grande simplicité de mise en oeuvre, reste que l'atmosphère produite est exempte d'oxygène mais contient de la vapeur d'eau, et convient donc à un nombre limité de traitements thermiques (convient par exemple au traitement du cuivre mais pas au traitement des aciers).

Il est vrai que pour ce cas précis d'un getter hydrogène, où de la vapeur d'eau est formée dans le gaz produit, il est possible de procéder à une épuration ultérieure de ce gaz, sur le principe de l'adsorption sur tamis moléculaire. Ces procédés, de désoxygénation catalytique suivie d'une épuration par adsorption sont couramment répertoriés dans la littérature sous l'appellation "deoxo". Ils permettent d'obtenir de l'azote dont la pureté est très proche de celui produit par voie cryogénique, typiquement O₂ inférieur à 10 ppm, H₂O inférieur à 10 ppm (point de rosée inférieur à -60°C), et le cas échéant, un très léger résiduel d'hydrogène.

L'azote issu d'un tel système présente donc une qualité très élevée, qui convient bien entendu à tous les types de traitements thermiques pratiqués dans l'industrie, mais qui est obtenu au prix d'un équipement "deoxo" relativement complexe et onéreux. Cet aspect onéreux est pour une large part lié à la nécessité d'utiliser une partie de l'azote produit par le dispositif pour la régénération de l'adsorbant (entre 15 et 30 % de l'azote produit).

Toujours dans cette catégorie de désoxygénation ex situ, la Demanderesse avait proposé, dans le document EP-A-482.992, l'utilisation d'une réaction azote impur + hydrocarbure sur un réacteur catalytique au platine, avec apport thermique extérieur.

Un tel procédé, par le fait qu'il permet d'utiliser de l'azote impur contenant une relativement forte proportion d'oxygène résiduel (par exemple entre 3 et 5 % volumique), et qu'il utilise un "getter" hydrocarbure (par exemple le gaz naturel), donne lieu à un très faible coût d'atmosphère.

Il faut encore noter que l'atmosphère ainsi produite est quasiment exempte d'oxygène (concentration résiduelle d'oxygène en tous cas inférieure à 20 ppm volumique) et contient de plus des espèces réductrices et carburantes telles que H₂ et CO fort utiles en traitement thermique, et permettant de contrôler les rapports H₂/H₂O et CO/CO₂, donc le potentiel oxydant ou réducteur de chaque atmosphère.

Reste qu'un tel procédé représente une certaine complexité de mise en oeuvre (nécessité d'un apport thermique extérieur, réaction à relativement haute température), qui le rend peu adapté au cas où il est nécessaire de mettre en place de faibles débits (quelques dizaines de m³/h seulement).

On peut donc conclure de ces observations que les procédés de désoxygénation ex situ présentent des avantages certains : température de la réaction de désoxygénation aisément contrôlable indépendamment de la température de l'enceinte thermique, ou encore le fait que la quantité d'oxygène résiduel présent initialement dans l'azote impur à traiter ne constitue pas une limitation dans la mesure où la réaction est totale avant que l'atmosphère n'entre en contact avec les pièces. Certes la réaction de désoxygénation ainsi conduite donne lieu à la formation d'espèces oxydantes telles que H₂O et CO₂ mais il est alors possible d'effectuer une post-épuration avant que l'atmosphère n'atteigne l'enceinte de traitement thermique, même si cette épuration se révèle très coûteuse en pratique.

Dans ce contexte, la présente invention a pour objectif de proposer un procédé amélioré d'élaboration d'azote par voie non cryogénique, mettant en oeuvre une étape de désoxygénation de cet azote et d'épuration des produits de réaction (essentiellement H₂O mais également le cas échéant CO₂, CO..), et dont les performances permettent d'améliorer l'étape d'épuration, tout en atteignant une flexibilité suffisante pour produire l'atmosphère simplement compatible avec le cahier des charges du traitement thermique considéré (compromis coût/performances, éviter les excès de qualité donc de coût).

La Demanderesse avait par ailleurs proposé, dans le document FR-A-2.639.251, un procédé du type précité (azote impur non cryogénique désoxygéné par voie catalytique), où l'étape d'épuration de vapeur d'eau était effectuée par condensation (échange du gaz avec un fluide froid conduisant à la condensation de la vapeur d'eau contenu dans le gaz, suivie d'une phase d'épuration de la phase liquide ainsi créée par passage dans un groupe frigorifique ou bien dans une membrane). Ce document signalait la possibilité de travailler en pression, tant au niveau du réacteur catalytique que durant la phase d'épuration.

Les travaux qu'a poursuivis la Demanderesse sur ce sujet ont démontré qu'il était nécessaire de perfectionner l'idée développée dans ce document d'un fonctionnement sous pression, pour proposer un procédé de génération d'azote par voie non cryogénique offrant une réponse aux problèmes techniques cités plus haut de flexibilité et d'adaptabilité au cahier des charges considéré, d'excellent compromis coût/performances, ou encore de simplicité d'emploi, par la mise en oeuvre combinée des mesures suivantes
- utiliser des étapes d'extraction de la vapeur d'eau basées sur la condensation, et réaliser tant la réaction catalytique proprement dite que les étapes d'épuration de la vapeur d'eau sous pression significative (préférentiellement au-dessus de 5 × 10⁵ Pa) ;
- compte tenu de ces conditions de pression, alimenter en azote impur le point où s'effectue le mélange réactionnel azote impur/gaz réducteur (hydrogène ou hydrocarbure) selon un mode tout ou rien non régulé;
- toujours en liaison avec les conditions de pression pratiquées, ne placer avantageusement la capacité tampon, qui sert traditionnellement de poumon dans un tel procédé, qu'en aval du point déjà évoqué où s'effectue le mélange réactionnel azote impur/gaz réducteur, et préférentiellement en aval de la phase d'épuration ou bien en amont du réacteur catalytique;
- le gaz étant alors sous pression, selon la configuration adoptée, jusqu'à la capacité tampon comprise, ou bien jusqu'à la phase d'épuration de vapeur d'eau comprise, on n'effectue l'étape de détente (pour obtenir un gaz de production à une pression d'utilisation voisine de la pression atmosphérique) qu'en aval de cette capacité tampon ou de la phase d'épuration considérée, .

En effet, comme développé plus loin dans le cadre d'exemples, le travail sous pression (si possible combinée avec l'utilisation d'une température pour la condensation suffisamment faible, par exemple 3°C) permet d'augmenter sensiblement le rendement de l'étape d'épuration de vapeur d'eau, et de le contrôler, mais aussi de diminuer le volume de catalyseur utile.

Il apparaît alors important de tirer avantage de la pression disponible à la sortie du générateur d'azote impur (réserve de pression qui n'est pas très élevée), mais également et surtout d'éviter toute perte de charge dans l'installation.

Une telle limitation des pertes de charges dans l'installation (et donc de la présence sur la ligne de moyens pouvant induire des pertes de charge) apparaît relativement incompatible avec deux caractéristiques de tels procédés de désoxygénation :
- d'une part il est nécessaire de contrôler précisément le rapport des concentrations oxygène/hydrogène ou encore oxygène/hydrocarbure du mélange réagissant dans le réacteur (pour éviter la présence intempestive d'oxygène résiduel à la sortie du réacteur);
- d'autre part, il faut tenir compte du fait que les générateurs de production d'azote impur (séparateurs d'air) fonctionnent traditionnellement selon des phases successives d'arrêt (0 m³/h , générateur arrêté) et de production (débit nominal X m³/h , générateur en service), alors qu'en revanche, le poste utilisateur en toute fin de ligne pourra aussi bien fonctionner en continu que faire varier son débit dans cette gamme 0-X m³/h, entraînant potentiellement une variation des conditions de réaction au niveau du réacteur catalytique.

La succession d'étapes du procédé selon l'invention permet précisément de limiter considérablement les pertes de charge dans l'installation tout en étant compatible avec les caractéristiques de fonctionnement ci-dessus évoquées, donnant lieu dans des conditions de coût extrêmement favorables à un excellent rendement d'extraction de la vapeur d'eau, rendement qui peut être adapté selon les conditions opératoires pratiquées pour rester le plus proche possible des spécifications réelles du cahier des charges de l'utilisateur, donnant lieu ainsi à la production d'un azote presque totalement dépourvu d'oxygène (inférieur à 20 ppm volumique) et relativement dépourvu de vapeur d'eau (selon les conditions pratiquées : moins de 1000 ppm résiduels de vapeur d'eau correspondant à un point de rosée inférieur à -20°C, ou encore si nécessaire moins de 700 ppm résiduelles de vapeur d'eau correspondant à un point de rosée inférieur à -25°C si les conditions du traitement l'exigent).

Le procédé de génération d'un gaz à base d'azote selon l'invention comporte alors les étapes suivantes :
- on élabore, dans un séparateur d'air par adsorption ou perméation, un gaz primaire d'azote qui comprend une teneur résiduelle en oxygène;
- on dirige ce gaz primaire, le long d'un conduit principal, vers un réacteur catalytique de désoxygénation;
- on adjoint au gaz primaire, avant son arrivée dans le réacteur, un gaz secondaire comprenant au moins un des gaz réducteurs du groupe constitué par l'hydrogène et les hydrocarbures ;
- on fait réagir, dans le réacteur catalytique, le gaz primaire et le gaz secondaire, de façon à obtenir en sortie de réacteur un gaz de réaction à base d'azote qui comprend de la vapeur d'eau;
- on procède à une phase d'épuration de tout ou partie de la vapeur d'eau contenue dans le gaz de réaction obtenu en sortie de réacteur catalytique, par la mise en oeuvre d'au moins une étape de refroidissement du gaz de réaction, puis d'au moins une étape d'extraction de la phase liquide induite dans le gaz de réaction du fait de l'étape de refroidissement, pour obtenir un gaz de réaction épuré;
et se caractérise par la mise en oeuvre combinée des mesures suivantes :
- la réaction ainsi que les étapes de refroidissement et d'extraction sont réalisées en pression;
- le point du conduit principal où s'effectue l'adjonction de gaz secondaire est alimenté en gaz primaire selon un mode tout ou rien non régulé.

On entend par mode "tout ou rien non régulé" selon l'invention, un mode où le point du conduit principal où s'effectue l'adjonction est alimenté en gaz primaire d'une façon binaire : 0 m³/h quand il n'est pas alimenté, X m³/h quand le point reçoit du gaz primaire, X représentant le débit nominal du séparateur, la portion de conduit principal située en amont de ce point et en aval du séparateur étant dépourvue de tout organe de contrôle de débit.

Un organe de "contrôle" de débit doit s'entendre selon l'invention comme tout instrument limiteur (par exemple une vanne de laminage, un orifice calibré..) ou régulateur d'un débit de gaz (par exemple une vanne proportionnelle, un régulateur de débit massique...).

Le fonctionnement sous pression selon l'invention doit donc s'entendre comme se situant a une pression supérieure à la pression atmosphérique, selon les résultats recherchés (cahier des charges), la pression de travail se situera avantageusement à au moins 2 10⁵ Pa absolus, préférentiellement dans l'intervalle [5 × 10⁵ Pa , 15 × 10⁵ Pa].

De même, et selon le cas considéré (performances recherchées, coûts localement de l'énergie et du gaz réducteur), on utilisera préférentiellement une source d'azote impur dont la teneur résiduelle en oxygène soit inférieure ou égale à 5% volumique, plus préférentiellement comprise entre 0,1 % et 3 %, et encore plus préférentiellement entre 0,5 et 2%.

Selon une des mises en oeuvre de l'invention, le gaz de réaction épuré obtenu en sortie de la phase d'épuration est dirigé et stocké dans une capacité tampon, d'où on l'extrait selon les besoins du poste utilisateur final. Ce gaz est alors avantageusement détendu (en une ou plusieurs opérations) jusqu'à une pression P_{f} d'utilisation du gaz par le poste utilisateur (par exemple un four). Cette pression Pf sera donc en général voisine de la pression atmosphérique (ce que l'on doit entendre selon l'invention comme une pression P_{f} située dans l'intervalle entre environ 1× 10⁵ Pa et 2 × 10⁵ Pa absolus). On notera donc que dans cette configuration, la ligne de gaz est en pression jusqu'à la capacité tampon comprise.

Selon une autre mise en oeuvre de l'invention, une capacité tampon est disposée en amont du réacteur catalytique, mais en aval du point déjà évoqué du conduit principal où s'effectue l'adjonction de gaz secondaire. L'étape de détente s'effectuera donc ici directement en sortie de la phase d'épuration. On notera donc que dans cette configuration, la ligne de gaz est en pression jusqu'à la phase d'épuration comprise.

Comme signalé précédemment, le procédé selon l'invention repose sur l'utilisation d'une pression significative durant toute une partie amont du procédé, et sur la réalisation d'une perte de charge minimum entre la source amont de gaz et le point de la ligne où s'effectue la phase d'épuration.

A cette fin, l'adjonction de gaz secondaire dans le conduit principal, pour réaliser le mélange azote impur/ gaz secondaire qui devra réagir dans le réacteur catalytique se fera avantageusement par injection "directe" du gaz secondaire dans le conduit principal.

"L'injection directe" selon l'invention doit alors s'entendre comme ne faisant intervenir aucun organe "significatif' de mélange qui serait source de perte de charge; On réalisera alors une telle injection par exemple à l'aide d'un conduit secondaire relié en sa partie amont à une source de gaz secondaire comprenant le gaz réducteur et en sa partie aval au conduit principal.

Avec le même souci d'éviter la présence en amont de tout organe pouvant induire une perte de charge, on remarquera que la capacité tampon qui représente traditionnellement le "poumon" de tels procédés de production d'azote sur site, est préférentiellement placée astucieusement en aval du point où s'effectue l'adjonction, préférentiellement en aval de la phase d'épuration de vapeur d'eau, ou bien entre le point d'adjonction et le réacteur catalytique. Comme déjà mentionné plus haut, Il faut en effet considérer que les générateurs de production d'azote impur (qu'il s'agisse de perméation ou d'adsorption), fonctionnent traditionnellement dans un régime d'alternance de phases : 0 m³/h (générateur arrêté) ou X m³/h (générateur en service à son débit nominal). Mais en revanche, le poste utilisateur en toute fin de ligne fonctionne en continu (hors de ses périodes d'arrêt) et peut faire varier son débit dans cette gamme.

Une capacité tampon placée (comme c'est le cas traditionnellement dans de tels générateurs d'azote sur site), juste à la sortie du séparateur d'air, s'accompagne alors de moyens de mesure et de contrôle (de régulation) du débit d'azote injecté dans le mélange, de façon à maintenir en permanence la proportion 02/gaz réducteur souhaitée alors que le procédé selon l'invention cherche précisément à limiter la présence de tels organes de contrôle, qui constituent de puissantes sources de pertes de charge. En effet, le poste utilisateur tirant un débit variable sur cette capacité tampon placée en amont du point de mélange va faire varier également la proportion d'azote impur parvenant au réacteur. Il est vrai que l'on pourrait, pour une telle configuration de capacité tampon traditionnelle, concevoir une simple mesure du débit d'azote sur le conduit principal juste derrière la capacité tampon, sans moyen de régulation, et une rétroaction, à partir de cette mesure de débit, sur la voie secondaire de gaz réducteur, où seraient en revanche disposés des moyens de mesure et de régulation du débit de gaz secondaire.

Cette solution, si elle est envisageable d'un point de vue conceptuel (puisqu'un simple moyen de mesure pourrait introduire une perte de charge relativement acceptable et compatible avec un fonctionnement sous pression), est nettement moins avantageuse du point de vue économique par la régulation qu'elle impose, mais également par la gestion nécessaire de l'aspect sécuritaire qu'elle engendre (notamment sur la voie du gaz réducteur).

La succession d'étapes du procédé selon l'invention, offre une solution qui tire avantage du fait que l'on peut utiliser de tels séparateurs comme des "générateurs de débit".

De façon plus précise, les deux configurations de capacité tampon proposées offrent l'avantage que le flux de gaz qui traverse le réacteur catalytique est de composition constante en oxygène et gaz réducteur (tel que fixé par les paramètres de fonctionnement du séparateur incluant son débit nominal et par le débit fixé de gaz secondaire arrivant dans le conduit principal).

Elles diffèrent en revanche sur les points suivants :
- la configuration "capacité en amont" (en amont du réacteur) permet de façon très avantageuse d'assurer que le débit qui traverse le réacteur catalytique est régulier (il correspond en effet au débit que tire l'utilisateur en bout de ligne), alors que pour la configuration "capacité en aval", le réacteur reçoit un débit azote/gaz réducteur qui suit les alternances de phases du séparateur;
- de plus, la configuration "amont" permet de disposer la capacité tampon en extérieur (alors que pour des raisons climatiques, réacteur catalytique et moyens utilisés pour l'extraction sont préférentiellement placés en intérieur), ce qui entraîne d'une part un gain de place significatif, mais offre surtout des avantages non négligeables en terme de sécurité. En effet, la capacité tampon placée en extérieur permet d'éviter qu'une ligne transportant du gaz réducteur (potentiellement très pur) ne circule à l'intérieur de l'atelier, notamment à proximité des divers coffrets électriques entrant dans la constitution de l'installation.

Comme il apparaîtra alors clairement à l'homme du métier au vu de cet exposé, la position choisie pour la place de la capacité tampon dépendra notamment de facteurs locaux (configuration des lieux), du cahier des charges recherché conduisant à la manipulation de concentrations plus ou moins élevées en gaz combustible (H2, CxHy..), donc plus ou moins problématique sur un plan sécuritaire.

La première étape de refroidissement selon le procédé est réalisée de façon à effectuer un refroidissement du gaz issu du réacteur catalytique (qui en sort généralement à une température non négligeable, par exemple voisine de 150°C dans le cas d'un azote à 1% d'oxygène résiduel), si possible à une température inférieure à 50°C, pour condenser la vapeur d'eau contenue dans le gaz, avant de procéder à son extraction, par exemple par décantation.

Cette première étape de refroidissement du gaz de réaction pourra par exemple s'effectuer par échange avec un fluide froid, par exemple dans un échangeur gaz/gaz (on pourra ici à titre d'exemple de réalisation utiliser un refroidisseur à air du type à convection naturelle ou forcée, très peu onéreux, et qui du fait du travail en pression, offre un coefficient d'échange grandement amélioré), ou encore un échangeur gaz/liquide (par exemple par passage du gaz dans un échangeur à eau qui peut avantageusement être constitué d'une lyre en cuivre ou en acier inoxydable baignant dans un bac à eau), ou bien un échangeur gaz/fluide de refroidissement (qu'il s'agisse par exemple d'un liquide cryogénique ou encore d'un fréon).

L'une des étapes de refroidissement pourra avantageusement être réalisée par passage du gaz de réaction dans l'une des voies d'un échangeur à plaques. Dans une telle configuration, il sera alors avantageux de faire transiter dans l'autre voie de l'échangeur à plaques le gaz de réaction déjà épuré, issu de la phase d'épuration, qui a des frigories à libérer.

En fait, comme il apparaîtra clairement à l'homme du métier au vue de cette description, on pourra, dans le cadre de l'invention, réaliser selon les besoins, de multiples combinaisons adaptées d'étapes de refroidissement et d'extraction, par exemple, et à titre purement illustratif, plusieurs combinaisons successives refroidissement/extraction, ou encore plusieurs étapes de refroidissement réalisant des paliers suivies d'un étape unique d'extraction, ou encore après la réalisation d'au moins une étape de refroidissement suivie(s) d'une étape d'extraction, la mise en oeuvre d'au moins une autre combinaison refroidissement/extraction.... Le choix de la succession d'étapes mise en oeuvre, et de la constitution de chaque étape, dépendra on le comprend, des performances que l'on souhaite atteindre. A titre d'illustration, les conditions à atteindre dans le cas d'un recuit d'aciers seront plus draconiennes que dans le cas d'un recuit de cuivre où de la vapeur d'eau peut, on le sait, être bien plus largement tolérée.

Puisqu'un générateur d'azote impur sur site fonctionne le plus souvent en phases successives de production et d'arrêt, il apparaît alors très avantageux de coupler les phases de démarrage (donc de fonctionnement) du séparateur et d'admission du gaz secondaire dans le conduit principal, de façon à éviter tout problème de sécurité lié à l'utilisation du gaz réducteur. A cet effet, on mettra en oeuvre les moyens nécessaires (par exemple une vanne pilotée présente sur le conduit secondaire de gaz secondaire), permettant que du gaz secondaire ne soit admis dans le conduit principal que si le séparateur est en phase de production (évitant ainsi que de l'hydrogène ou un hydrocarbure arrive potentiellement pur dans le four de traitement thermique sans avoir été combiné à de l'oxygène).

On remarquera également, que pour respecter l'objectif de limitation de pertes de charge en amont du point où est effectuée la phase d'épuration, on ne tolère éventuellement d'organe de contrôle de débit, en amont du point d'adjonction, que sur la ligne secondaire d'amenée du gaz secondaire. La présence de tels organes sur cette ligne secondaire entraîne peu de conséquences défavorables en terme de perte de charge puisque le plus souvent, on disposera d'une réserve importante de pression sur cette ligne (par exemple 200 10⁵ Pa sur un cadre de bouteilles conditionné d'hydrogène pur), ce qui n'est nullement le cas sur le conduit principal raccordé au séparateur on-site.

Néanmoins, on utilisera avantageusement sur le conduit secondaire, pour des raisons de coût, un orifice calibré.

Comme il apparaîtra également clairement à l'homme du métier, selon l'atmosphère recherchée, on utilisera selon les cas, un gaz réducteur d'hydrogène ou bien un hydrocarbure (qu'il s'agisse d'un composé de formule CxHy ou encore d'un alcool). Le gaz de réaction obtenu en sortie de réacteur aura alors une composition bien différente (N₂ + H₂0 + éventuellement un résiduel d'hydrogène dans un cas, une atmosphère bien plus complexe dans d'autres cas, incluant N₂ , H₂0, mais aussi plus ou moins d'hydrogène, de CO, de CO₂, ou encore un résiduel d'hydrocarbure...).

On s'attachera alors dans ce dernier cas, et selon la destination de l'atmosphère, à effectuer, en un point du conduit principal situé en aval du réacteur catalytique, à au moins une opération additionnelle d'épuration d'au moins l'un des gaz du groupe constitué de CO et CO₂.

Le gaz d'azote élaboré selon l'invention pourra alors concerner des traitements très variés, allant par exemple des traitements de ferreux (par exemple recuits d'aciers, frittages, revenus, chauffage avant trempe, cémentation, carbonitruration, ...), de non ferreux (par exemple recuits de cuivre, de nickel, de leurs alliages, frittages...), des opérations de scellement verre/métal, de soudage ou brasage (qu'il s'agisse de brasage dur, ou encore tendre comme en microélectronique), ou encore de procédé de métallisation de substrats.

Comme signalé précédemment, le procédé d'élaboration d'un gaz à base d'azote selon l'invention présente des caractéristiques de grande flexibilité permettant de produire l'atmosphère tout simplement compatible avec le cahier des charges du poste utilisateur considéré, donc tolérant au besoin une certaine quantité de vapeur d'eau résiduelle compatible avec le traitement thermique considéré (éviter les excès de qualité donc les surcoûts).

Néanmoins, selon une des mises en oeuvre de l'invention, on pourra choisir de faire parvenir au poste utilisateur non pas le gaz de réaction final épuré mais un mélange de ce gaz de réaction épuré et du gaz de réaction issus du réacteur catalytique avant son épuration.

Ceci pourra s'effectuer en prélevant une partie du débit de gaz de réaction issu du réacteur catalytique, avant qu'il n'atteigne la phase d'épuration, pour le mélanger au gaz de réaction final épuré dans les proportions requises par le cahier des charges du poste utilisateur considéré (en termes notamment de teneur résiduelle en vapeur d'eau).

Dans une telle configuration, si le site utilisateur comporte plusieurs postes utilisateurs dont les besoins en atmosphère différent, on pourra alors, de façon très avantageuse, réaliser de façon différenciée au niveau de chaque poste le mélange à partir des deux flux gaz de réaction non épuré/gaz de réaction épuré dans des proportions contrôlées (voire régulées) requises par le poste considéré.

Cette mise en oeuvre « multi-postes » nécessitera alors l'utilisation de moyens delocalisés classiques de mélange et contrôle du mélange ainsi effectué (tels que vannerie, debimétrie, voire des moyens de régulation tels que régulateurs de débit, et moyens de mesure de la teneur en vapeur d'eau résultante).

On le voit donc, le procédé selon l'invention permet, en utilisant l'une de ses multiples forme de mises en oeuvre, de faire parvenir au(x) poste(s) utilisateur(s) final(aux) l'atmosphère à base d'azote que le poste considéré requiert.

Avantageusement, on procédera à une régulation de la pression du gaz parvenant au réacteur catalytique, en intercalant un détendeur juste en amont du réacteur.

Certes un tel détendeur introduit alors sur la ligne une légère perte de charge (typiquement de l'ordre de 1 à 2 bar), donc entraîne à ce titre une certaine dégradation du point de rosée, mais présente en revanche l'avantage de permettre un contrôle parfait de la pression de gaz parvenant au réacteur catalytique et donc une régulation du point de rosée produit.

Une telle configuration sera alors en particulier compatible avec des traitements thermique où il n'est pas nécessaire d'atteindre des niveaux de point de rosée extrêmes.

L'invention concerne également une installation de génération d'un gaz à base d'azote, comprenant successivement le long d'un conduit de gaz principal :
- une source d'azote impur sous pression (dont la concentration résiduelle d'oxygène est avantageusement inférieure ou égale à 5 % volumique et préférentiellement comprise entre 0,1 % et 3 % volumique, mais plus préférentiellement comprise entre 0,5 et 2 %);
- un réacteur catalytique de désoxygénation ;
- un dispositif d'épuration de tout ou partie de la vapeur d'eau contenue dans un gaz, comprenant au moins un moyen de refroidissement d'un gaz et au moins un moyen d'extraction de tout ou partie de la phase d'eau liquide contenue dans un gaz;
et une ligne de gaz secondaire, reliée en sa partie amont à une source de gaz secondaire comprenant au moins un des gaz réducteurs du groupe constitué par l'hydrogène et les hydrocarbures , et en sa partie aval, au conduit principal, en un point situé en amont du réacteur catalytique;
et se caractérise en ce que la portion de conduit principal située en amont du point du conduit principal où est reliée la ligne de gaz secondaire et en aval de la source d'azote impur, est dépourvue de tout organe de contrôle de débit.

Selon une des mises en oeuvre de l'invention, l'installation comprend au moins deux moyens d'extraction, entre lesquels est disposé un moyen intermédiaire de refroidissement.

Selon une des mises en oeuvre de l'invention, l'installation comprend une capacité tampon située en aval du point du conduit principal où s'effectue l'adjonction de gaz secondaire, dans l'une des deux positions suivantes : en aval du dispositif d'épuration ou en un point situé en amont du réacteur catalytique.

D'autres caractéristiques et avantages de la présente invention ressortiront de la description suivantes de modes de réalisation donnée à titre illustratif mais nullement limitatif, faite en relation avec les dessins annexés, sur lesquels :
- la figure 1 est une représentation schématique d'une installation convenant pour la mise en oeuvre du procédé selon l'invention ;
- la figure 2 est une vue schématique donnant le détail de la phase d'épuration de vapeur d'eau intervenant figure 1;
- les figures 3, 4 et 5 illustrent d'autres variantes de réalisation de la phase d'épuration.

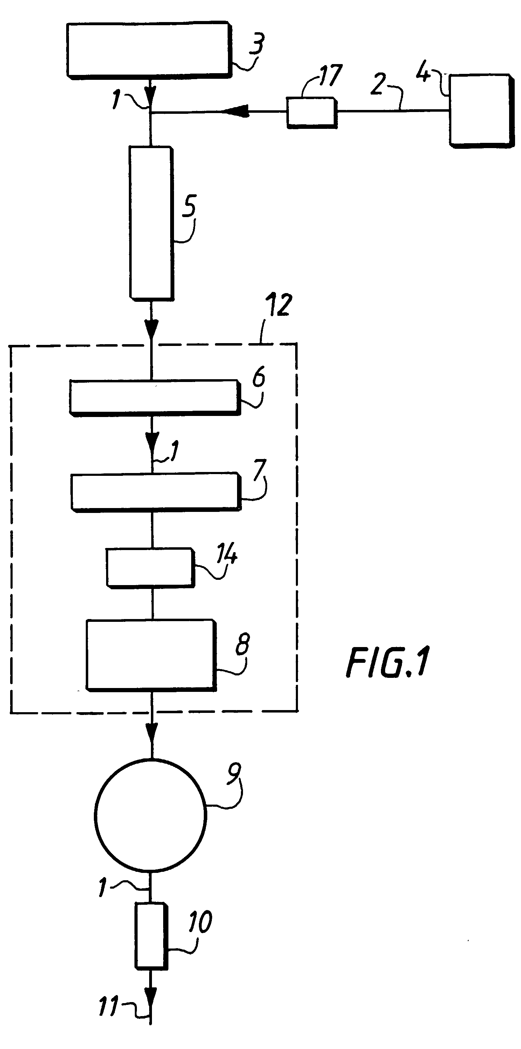

On reconnaît sur la figure 1, le long d'une ligne ou conduit principal 1, la présence d'un séparateur d'air 3 par adsorption ou perméation, produisant un azote impur dont la teneur résiduelle en oxygène est ici inférieure ou égale à 5 % volumique, à une pression voisine de 11 10⁵ Pa, qui est dirigé le long du conduit 1 vers un réacteur catalytique de désoxygénation 5 (par exemple du type palladium sur alumine). Avant que cet azote impur n'atteigne le réacteur, on lui adjoint grâce au conduit secondaire 2, un gaz secondaire comprenant pour le mode de réalisation représenté de l'hydrogène provenant de la source 4, par injection directe dans le conduit principal 1.

Le conduit secondaire 2 est muni pour le mode de réalisation représenté d'un orifice calibré 17.

Les conditions de production du séparateur sont préréglées, en débit et en pureté résiduelle d'oxygène pour tenir compte du cahier des charges émis par l'utilisateur, mais aussi le cas échéant d'autres contraintes de type économique locale pouvant influencer le dimensionnement donc la production du séparateur (par exemple prix des modules membranaires, coût de l'électricité...).

Pour un débit et une pureté donnée du séparateur, l'injection de gaz secondaire (par exemple d'hydrogène pur) sera fixée (en débit) compte tenu de la stoechiométrie de la réaction de formation d'eau (on s'attachera en pratique à être légèrement au dessus du rapport 2 entre apport d'hydrogène et apport d'oxygène).

Comme déjà mentionné plus haut, un tel séparateur fonctionne selon des phases successives, remplissant une capacité tampon ou s'arrêtant au rythme de fonctionnement du poste utilisateur. L'emplacement de la capacité tampon selon l'invention, assure un maintien parfait de la ligne en pression, par l'absence de moyens de contrôle de débit, la composition du mélange traversant le réacteur catalytique étant constante (telle que préfixée). Le débit traversant le réacteur catalytique suit pour la configuration de capacité tampon adoptée ici (configuration aval), les phases de production du séparateur.

Pour le mode de réalisation représenté figure 1, le gaz de réaction, obtenu en sortie du réacteur catalytique 5, résultant de la réaction à l'intérieur du réacteur du mélange d'azote impur et de gaz secondaire comprenant de l'hydrogène, subit alors une phase d'épuration de sa vapeur d'eau résiduelle, symbolisée sur la figure 1 par le nombre 12.

Cette phase 12 comprend en fait de multiples étapes symbolisées 6, 7, 14, 8.

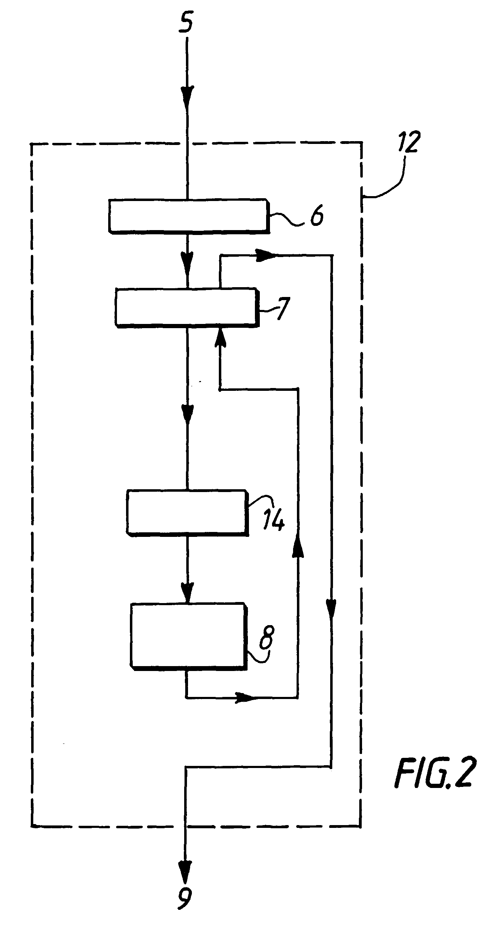

La première étape 6 est obtenue par passage dans un refroidisseur à air du type à convection forcée ou naturelle (échangeur gaz/gaz), l'étape 7 est constituée d'un échangeur à plaques (autre échangeur gaz/gaz) dont le fonctionnement sera détaillé dans le cadre de la figure 2, l'étape 14 est constituée d'un échangeur gaz/fluide de refroidissement (en l'occurrence ici un fréon), alors que l'étape 8 qui est une étape d'extraction, est constituée ici d'un extracteur d'eau liquide par décantation et purge.

On peut alors donner, pour ce mode de réalisation et pour une composition considérée du mélange gazeux qui réagit dans le réacteur catalytique, un ordre de grandeur des températures atteintes à chaque étape pour le gaz : voisine de 150°C en sortie de réacteur, de 50°C en sortie de refroidisseur 6, de 15°C en sortie de refroidisseur 7, et de 3°C en sortie de refroidisseur au fréon 14.

Selon les performances recherchées, on pourra par exemple envisager une installation telle que celle de la figure 1 mais réduite aux éléments 6 et 8 (une seule étape de refroidissement).

En sortie de phase d'épuration 12, le gaz de réaction épuré est alors dirigé dans une capacité tampon 9, d'où du gaz est régulièrement extrait selon les besoins du site utilisateur 11 situé en bout de ligne, pour être détendu (10), afin de ramener sa pression à une pression voisine de la pression atmosphérique.

La figure 2 fournit le détail de la phase d'épuration intervenant figure 1, avec le fait que le gaz de réaction obtenu en sortie d'étape d'extraction 8 va transiter par l'autre voie de l'échangeur à plaques 7, où il peut ainsi échanger ses frigories, avant d'atteindre la capacité tampon 9.

Une variante de réalisation de la phase dépuration 12 de la figure 2 pourrait consister en la succession échangeur à plaques 7/échangeur au fréon 14/extracteur 8 (absence de l'échangeur gaz-gaz 6). Cette configuration permet si besoin est de préchauffer le gaz que l'on envoi vers le poste utilisateur final. En effet, le gaz de réaction obtenu en sortie de l'extracteur 8, qui est envoyé vers une des voies de l'échangeur à plaques 7, y rencontre le gaz provenant directement du réacteur 5 (au lieu d'un gaz ayant subi l'étape de prérefroidissement 6) donc relativement chaud. Cette configuration sera alors préférentiellement mise en oeuvre avec une capacité tampon en position amont, pour éviter de diriger ce gaz "chaud" vers la capacité tampon 9, mais plutôt directement vers le poste utilisateur via l'étape de détente.

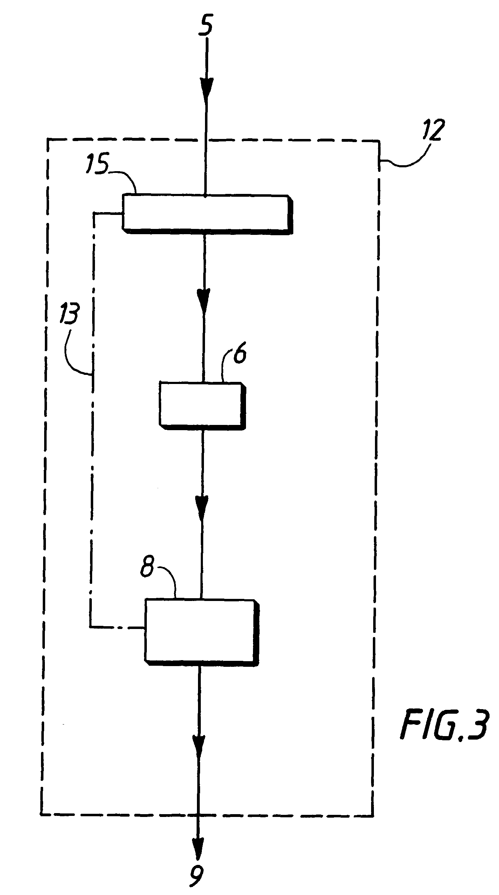

La figure 3 illustre une variante de réalisation de la phase d'épuration 12 selon l'invention, où le gaz rencontre successivement un refroidisseur du type échangeur à eau 15 (par exemple une lyre en cuivre ou en acier inoxydable baignant dans un bac à eau), avant de rencontrer un refroidisseur 6 du type déjà décrit, puis l'extracteur 8.

Comme déjà signalé, l'extracteur 8 possède son propre purgeur qui élimine l'eau condensée en excès et l'évacue ici avantageusement vers le bac à eau de l'échangeur à eau 15 (recirculation symbolisée par le nombre 13).

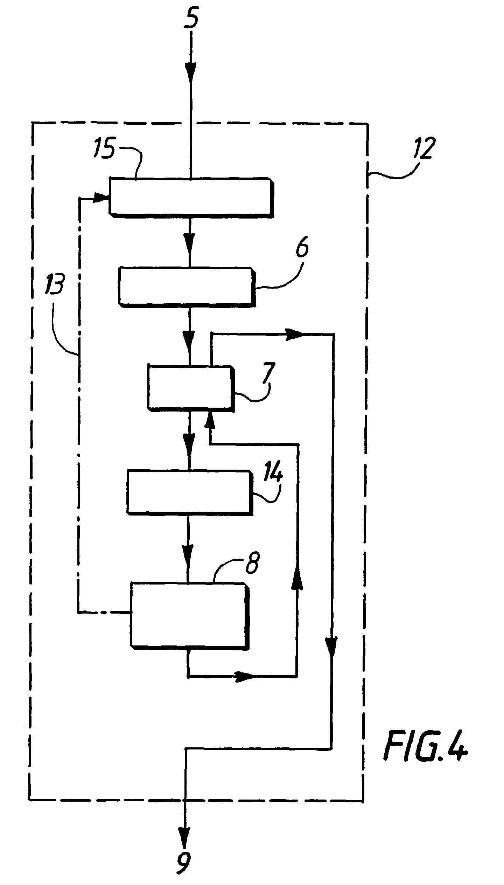

La figure 4 illustre une autre variante de la phase d'épuration 12 de la figure 1, où avant de rencontrer le refroidisseur 6, le gaz de réaction entre d'abord en contact avec un échangeur à eau 15 du type déjà décrit. On a symbolisé sur cette figure le transit du gaz de réaction obtenu en sortie d'extracteur 8 par une des voies de l'échangeur à plaques 7 avant d'être dirigé vers la capacité tampon. On a également symbolisé par le nombre 13 la recirculation avantageuse de l'eau liquide extraite au niveau de l'extracteur 8 vers l'échangeur à eau 15.

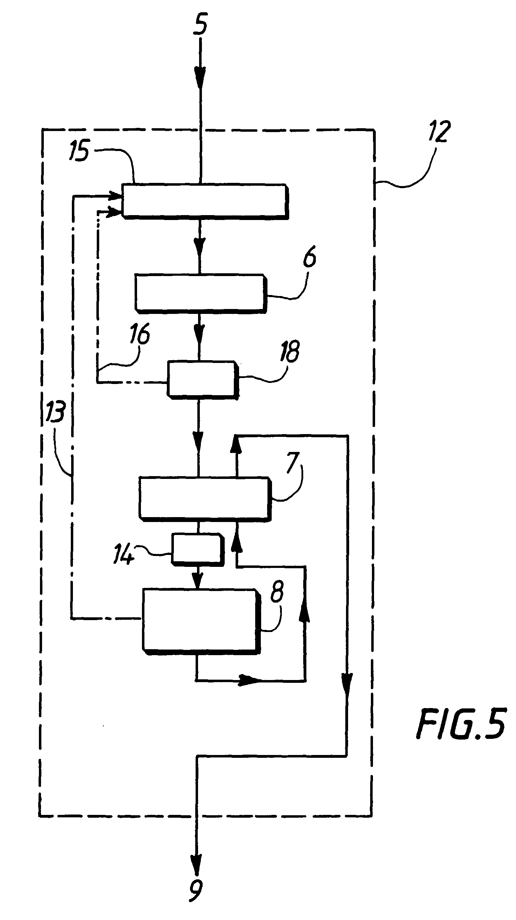

La figure 5 illustre quant à elle la succession suivante : refroidisseur à eau 15/ refroidisseur à air 6/ un extracteur intercalé 18/ refroidisseur à plaque 7/ refroidisseur par échange avec fluide de refroidissement 14/ extracteur final 8.

On a alors symbolisé de plus ici la recirculation 16 avantageuse de l'eau liquide extraite au niveau de l'extracteur 18 vers l'échangeur à eau 15.

Si tous ces modes de réalisation illustrent une capacité placée en aval de l'extracteur, comme signalé précédemment, cette capacité pourrait aussi avantageusement se situer entre le point du conduit où s'effectue le mélange et le réacteur catalytique 5.

Pour tous les modes de réalisation illustrés dans le cadre des figures 1 à 5, le mélange réactionnel formé à partir des sources 3 et 4 parvient directement, sans contrôle au réacteur 5. Comme signalé précédemment, il serait également possible d'intercaler, entre le point du conduit 1 où s'effectue l'adjonction de gaz secondaire 4 et le réacteur 5, un détendeur permettant de contrôler et réguler la pression de mélange réactionnel parvenant au réacteur 5.

De même, si ces figures illustrent un cas où un unique poste utilisateur 11 est tout simplement alimenté par le mélange gazeux final épuré, issu de la phase d'épuration 12, on pourrait, comme signalé précédemment, moduler les caractéristiques du mélange qui parvient au poste utilisateur 11 en dérivant une partie du gaz de réaction (non encore épuré) entre le réacteur 5 et la phase d'épuration 12 pour le mélanger au gaz de réaction épuré, avant que celui-ci n'atteigne le poste utilisateur 11.

Une installation telle que celle décrite dans le cadre de la figure 1 a été utilisée pour la mise en oeuvre d'un exemple de réalisation de l'invention.

On a utilisé un générateur d'azote impur 3 du type membranaire, fournissant une concentration résiduelle d'oxygène de 1 % volumique, à une pression utile de 11 x 10⁵ Pa absolus, et à une température voisine de 40°C.

Ce générateur fournit tour à tour 0 m³/h (phase d'arrêt) ou 100 % du débit nominal D1 (phase de production) du générateur d'azote réglé à 1 % d'oxygène résiduel.

Par ailleurs, on a utilisé une source de gaz secondaire 4 qui est de l'hydrogène pur, débitant dans le conduit secondaire de l'hydrogène à 15 × 10⁵ Pa absolus, et à la température ambiante. Compte tenu des conditions de stoechiométrie de la réaction, le débit d'hydrogène parvenant dans le conduit principal est de 2,4 % du débit nominal D₁ (lorsque le séparateur est en fonctionnement, de 0 m³/h sinon). On se situe donc ici à un débit d'hydrogène très légèrement supérieur au débit minimum nécessaire pour respecter la stoechiométrie de la réaction.

A l'intérieur du réacteur catalytique 5, la réaction H₂ + 1/2 O₂ → H₂O s'amorce sans apport thermique extérieur mais est exothermique, donnant lieu à la production d'un gaz de réaction dont la température est ici voisine de 150°C.

Les autres caractéristiques du gaz de réaction obtenu en sortie de réacteur sont les suivantes :
- moins de 20 ppm d'oxygène résiduel ;
- 0,4 % d'hydrogène résiduel;
- 2 % d'H₂O résiduel ;
- la pression du gaz étant P = 11 × 10⁵ Pa.

Le débit obtenu est ici est de 0 m³/h ou 101,4 % du débit nominal D₁.

En sortie de refroidisseur à air 6, les caractéristiques du gaz de réaction sont les suivantes :
- gaz = N₂ + 1,1 % H₂O + 0,4 % d'hydrogène + eau liquide condensée;
- P = 11 × 10⁵ Pa ;
- température T = 50°C ;
- débit = 0 ou 100,5 % D₁.

Le gaz qui sort du refroidisseur 6 entre alors dans un décanteur/purgeur (non représenté figure 1, qui permet d'éjecter la phase liquide) dont il ressort pour entrer alors dans un échangeur à plaques 7. Les caractéristiques du gaz issu de cet échangeur à plaques sont alors les suivantes :
- gaz = N₂ + 1100 ppm H₂O + 0,4 % d'hydrogène + eau liquide condensée ;
- P = 11 × 10⁵ Pa ;
- T = 15°C ;
- débit = 0 ou 99,5 % de D₁.

Le gaz de réaction a donc été refroidi dans l'échangeur à plaques, à une température inférieure à 50°C (ici en l'occurrence voisine de 15°C) ; il peut alors entrer dans le refroidisseur au fréon 14, dans lequel il cède ses calories à du fréon qui tourne en circuit fermé à environ 3°C.

Les caractéristiques du gaz de réaction obtenu en sortie du refroidisseur au fréon 14 sont alors les suivantes :
- gaz = N₂ + 700 ppm H₂O + 0,4 % d'hydrogène + eau liquide condensée;
- P =11 × 10⁵Pa ;
- T = 3°C ;
- débit = 0 ou 99,5 % de D₁.

Au sortir du refroidisseur au fréon, le gaz de réaction élimine sa phase liquide dans l'extracteur/purgeur 8.

A titre illustratif, il est à signaler que si l'ensemble des étapes de refroidissement avait été réalisé, non pas en pression mais à pression atmosphérique (en détendant le gaz à pression atmosphérique avant son arrivée sur la première étape de refroidissement), on aurait obtenu une teneur en vapeur d'eau de 7600 ppm (au lieu de 700 comme c'est le cas sur l'exemple illustré).

Toujours à titre illustratif, si un détendeur était intercalé juste avant le réacteur catalytique, il entraînerait la réalisation d'une perte de charge voisine de 2 bar, d'où une pression du gaz de réaction voisine de 9 10⁵ Pa absolus. Toute autre condition maintenue par ailleurs constante (notamment la température de 3°C du refroidisseur 14), on obtiendrait dans le gaz épuré final une teneur en vapeur d'eau dégradée d'environ une centaine de ppm.

Le gaz froid à 3°C obtenu en sortie d'extracteur peut éventuellement servir de fluide de refroidissement dans une des voies de l'échangeur à plaques où il s'y réchauffe jusqu'à la température ambiante.

Directement au sortir de l'extracteur, ou en passant par une des voies de l'échangeur à plaques selon le cas, le gaz de réaction est alors admis, toujours en pression, dans la capacité tampon 9, où ses caractéristiques sont celles qu'il avait en sortant de l'extracteur, excepté sa température qui est ici voisine de 30°C (c'est à dire la température ambiante de l'atelier).

Selon les besoins du poste utilisateur final, du gaz est régulièrement extrait de la capacité tampon, pour transiter par un détendeur et un organe de contrôle du débit utilisateur, avant de parvenir sur le poste utilisateur 11 constitué par exemple par un four de traitement thermique.

Les caractéristiques du gaz épuré qui parvient à un tel four de traitement thermique sont alors les suivantes :
- gaz = N₂ + 700 ppm H₂O + 0,4 % d'hydrogène;
- P = 1 × 10⁵ Pa absolu ;
- T = la température ambiante ;
- débit = le débit continu ou ponctuel de l'utilisateur = d % de D₁.

Par ailleurs, le fonctionnement de la capacité tampon (en tant que poumon) est bien connu et ne sera pas redétaillé ici (lorsque la pression dans la capacité tampon passe en-dessous d'un seuil limite bas, le séparateur se remet en service, alors que le séparateur est mis à l'arrêt, lorsque cette pression passe au-dessus d'un seuil limite haut).

Ainsi, si par exemple D₁ est une base 100, et que le débit de l'utilisateur par rapport à cette base 100 est égal à 70, alors le générateur fonctionnera 70 % du temps à sa valeur nominale D₁ et 30 % du temps à sa valeur 0.

On notera que dans tous les cas, le débit de l'utilisateur doit être inférieur ou égal au débit nominal D₁ du générateur d'azote; aussi, pour se prémunir contre d'éventuels problèmes de dépassement de consommation, il est possible soit de mettre une alarme liée à un seuil minimal de pression dans la capacité tampon, soit de mettre en place un déverseur à l'entrée de la capacité tampon et réguler ainsi une pression minimale en amont du déverseur.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Procédé de génération d'un gaz à base d'azote en vue de l'alimentation d'au moins un poste utilisateur selon lequel :
- on élabore, dans un séparateur (3) d'air par adsorption ou perméation, un gaz primaire d'azote qui comprend une teneur résiduelle en oxygène ;
- on dirige ce gaz primaire, le long d'un conduit principal (1), vers un réacteur (5) catalytique de désoxygénation;
- on adjoint au gaz primaire, avant son arrivée dans le réacteur, un gaz secondaire (4) comprenant au moins un des gaz réducteurs du groupe constitué par l'hydrogène et les hydrocarbures ;
- on fait réagir, dans le réacteur catalytique, le gaz primaire et le gaz secondaire, de façon à obtenir en sortie de réacteur un gaz de réaction à base d'azote qui comprend de la vapeur d'eau;
- on procède à une phase (12) d'épuration de tout ou partie de la vapeur d'eau contenue dans le gaz de réaction obtenu en sortie de réacteur catalytique, par la mise en oeuvre d'au moins une étape de refroidissement (6, 7, 15, 14) du gaz de réaction, puis d'au moins une étape d'extraction (8, 18) de la phase liquide induite dans le gaz de réaction du fait de l'étape de refroidissement, pour obtenir un gaz de réaction épuré;
caractérisé par la mise en oeuvre combinée des mesures suivantes :
- ladite réaction ainsi que lesdites étapes de refroidissement et d'extraction sont réalisées en pression;
- le point du conduit principal où s'effectue l'adjonction de gaz secondaire est alimenté en gaz primaire selon un mode tout ou rien non régulé.

2. Procédé selon la revendication 1, caractérisé en ce que la dite phase d'épuration comprend au moins deux étapes d'extraction (18, 8), entre lesquelles le gaz de réaction subit au moins une étape intermédiaire (7, 14) de refroidissement.

3. Procédé selon la revendication 1 ou 2, caractérisé en ce que le gaz de réaction épuré obtenu en sortie de ladite phase d'épuration est temporairement stocké dans une capacité tampon (9), d'où il est extrait pour alimenter au moins un poste utilisateur (11) situé en bout de conduit (1)

4. Procédé selon la revendication 1 ou 2, caractérisé en ce qu'avant d'atteindre le réacteur catalytique, le dit gaz primaire auquel a été adjoint le dit gaz secondaire, est stocké temporairement dans une capacité tampon disposée en amont du réacteur catalytique (5), mais en aval du dit point du conduit principal où s'effectue l'adjonction de gaz secondaire.

5. Procédé selon la revendication 3 ou 4, caractérisé en ce que le gaz de réaction épuré obtenu en sortie de la dite phase d'épuration (12) est, avant d'atteindre le dit poste utilisateur, détendu jusqu'à une pression P_{f} comprise entre environ 1 × 10⁵ Pa et 2 × 10⁵ Pa.

6. Procédé selon l'une des revendications 1 à 5, caractérisé en ce que ladite réaction ainsi que lesdites étapes de refroidissement et d'extraction sont réalisées à une pression comprise dans l'intervalle [2 × 10⁵ Pa, 15 × 10⁵ Pa].

7. Procédé selon l'une des revendications 1 à 6, caractérisé en ce que l'on dérive une partie du gaz de réaction, avant qu'il n'atteigne la phase 12 d'épuration, et on mélange ce gaz de réaction non épuré ainsi dérivé au gaz de réaction épuré obtenu en sortie de phase d'épuration, dans des proportions permettant d'atteindre les spécifications requises par le ou les dit poste utilisateur.

8. Procédé selon la revendication 7, caractérisé en ce que l'on régule la teneur en vapeur d'eau du mélange ainsi réalisé.

9. Procédé selon l'une des revendications 1 à 6, caractérisé en ce que l'on alimente plusieurs postes utilisateurs, dont les besoins en terme de pureté en vapeur d'eau différent, de la façon suivante :
a) on dérive un partie du gaz de réaction, avant qu'il n'atteigne la phase 12 d'épuration ;
b) on réalise, au niveau de chacun desdits postes utilisateurs, un mélange entre le gaz de réaction non épuré dérivé de l'étape a) et le gaz de réaction épuré obtenu en sortie de phase 12 d'épuration, dans des proportions permettant d'atteindre les spécifications en vapeur d'eau requises par le poste utilisateur considéré.

10. Procédé selon la revendication 9, caractérisé en ce que l'on régule la teneur en vapeur d'eau du mélange ainsi réalisé au niveau de chaque poste utilisateur.

11. Procédé selon l'une des revendications 1 à 10, caractérisé en ce que on régule la pression du mélange de gaz primaire et de gaz secondaire parvenant au réacteur catalytique à l'aide d'un détendeur disposé sur le conduit principal en amont du réacteur.

12. Procédé selon l'une des revendications 1 à 11, caractérisé en ce que la teneur résiduelle en oxygène dudit gaz primaire d'azote est inférieure ou égale à 5% volumique.

13. Procédé selon la revendication 12, caractérisé en ce que la teneur résiduelle en oxygène dudit gaz primaire d'azote est comprise entre 0,1 % et 3 % volumique.

14. Procédé selon l'une des revendications 1 à 13, caractérisé en ce que ladite adjonction de gaz secondaire au gaz primaire est effectuée par injection directe du gaz secondaire dans le conduit principal.

15. Procédé selon l'une des revendications 1 à 14, caractérisé en ce que l'une des dites étapes de refroidissement est réalisée par passage du gaz de réaction dans l'une des voies d'un échangeur à plaques (7), et en ce qu'on fait transiter dans l'autre voie de l'échangeur à plaques le gaz de réaction épuré issu de la phase d'épuration.

16. Procédé selon la revendication 15, caractérisé en ce que la phase d'épuration comprend le passage du gaz de réaction successivement dans l'échangeur à plaques, un échangeur gaz/fluide de refroidissement, et un moyen d'extraction de la phase liquide du gaz de réaction.

17. Procédé selon l'une des revendications 1 à 16, caractérisé en ce que le fonctionnement dudit séparateur et l'admission du gaz secondaire dans le conduit principal sont couplées par le fait que du gaz secondaire n'est admis dans le conduit principal que si ledit séparateur est en phase de production.

18. Procédé selon l'une des revendications 1 à 17, caractérisé en ce que le débit de gaz secondaire parvenant dans le conduit principal est contrôlé par l'utilisation d'un orifice calibré (17).

19. Procédé selon l'une des revendications 1 à 18, caractérisé en ce que le dit gaz réducteur est un hydrocarbure de formule CxHy, et en ce que l'on procède, en un point du conduit principal situé en aval du réacteur catalytique, à au moins une opération additionnelle d'épuration d'au moins l'un des gaz du groupe constitué de CO et CO₂.

20. Installation de génération d'un gaz à base d'azote convenant notamment pour la mise en oeuvre du procédé selon l'une des revendications 1 à 19, comprenant successivement le long d'un conduit de gaz principal :
- une source (3) d'azote impur sous pression contenant une concentration résiduelle en oxygène;
- un réacteur (5) catalytique de désoxygénation;
- un dispositif d'épuration de tout ou partie de la vapeur d'eau contenue dans un gaz, comprenant au moins un moyen (6, 7, 14, 15) de refroidissement d'un gaz et au moins un moyen (8, 18) d'extraction de tout ou partie de la phase d'eau liquide contenue dans un gaz ;
et une ligne (2) de gaz secondaire, reliée en sa partie amont à une source (4) de gaz secondaire comprenant au moins un des gaz réducteurs du groupe constitué par l'hydrogène et les hydrocarbures, et en sa partie aval, au conduit principal, en un point situé en amont du réacteur catalytique,
caractérisée en ce que la portion de conduit principal située en amont du dit point du conduit principal où est reliée la ligne de gaz secondaire et en aval de la source d'azote impur est dépourvue de tout organe de contrôle de débit.

21. Installation selon la revendication 20, caractérisée en ce qu'elle comprend au moins deux moyens d'extraction, entre lesquels est disposé un moyen intermédiaire de refroidissement.

22. Installation selon la revendication 20 ou 21, caractérisée en ce que qu'elle comprend une capacité tampon (9) située en aval du dit point du conduit principal où est reliée la ligne de gaz secondaire, dans l'une des deux positions suivantes : en aval du dit dispositif d'épuration ou en un point situé en amont du réacteur catalytique.

23. Installation selon l'une des revendications 20 à 22, caractérisée en ce qu'au moins l'un des dits moyens de refroidissement est un échangeur gaz/gaz, ou un échangeur gaz/liquide, ou un échangeur gaz/fluide de refroidissement.

24. Installation selon la revendication 23, caractérisée en ce que le dit dispositif d'épuration comprend successivement un échangeur à plaques, un échangeur gaz/fluide de refroidissement, et un moyen d'extraction de la phase d'eau liquide contenue dans un gaz.

25. Installation selon l'une des revendications 20 à 24, caractérisée en ce que ledit conduit secondaire reliant une source de gaz secondaire au conduit principal est muni d'un orifice calibré.
